# EUROPEAN PATENT SPECIFICATION

(11) **EP 2 699 858 B1**
(45) Date of publication and mention of the grant of the patent: **30.05.2018**
(21) Application number: 12774092.6
(22) Date of filing: 20.04.2012
(51) Int. Cl.: F25J 3/00, B01D 53/48, C01B 17/45, B01D 53/00

(54) **A PLANT AND METHOD FOR RECOVERING SULPHUR HEXAFLUORIDE FOR REUSE**
ANLAGE UND VERFAHREN ZUR RÜCKGEWINNUNG VON SCHWEFELHEXAFLUORID ZUR WIEDERVERWENDUNG
INSTALLATION ET PROCÉDÉ POUR LA RÉCUPÉRATION D'HEXAFLUORURE DE SOUFRE EN VUE DE SA RÉUTILISATION

(30) Priority: 21.04.2011 AU 2011901510
(43) Date of publication of application: 26.02.2014
(73) Proprietor: ABB Schweiz AG, 5400 Baden (CH)
(72) Inventor: SMITH, Peter, Andrew, Castle Hill 2154 (AU); ROBY, David, Alan, Barden Ridge, New South Wales 2234 (AU); ROBBIE, Duncan Gwai Yee, Rochedale South, Queensland 4123 (AU); ALEXANDER, Brett, Casula, New South Wales 2170 (AU); DAVIES, Wayne, Alexander, Gordon, New South Wales 2072 (AU)
(74) Representative: ABB Patent Attorneys
(86) International application number: PCT/AU2012/000417
(87) International publication number: WO 2012/142672

(56) References cited:
- WO-A1-2005/119149
- WO-A1-2005/119149
- JP-A- 2002 090 061
- US-A- 4 274 851
- US-A- 4 274 851
- US-A- 4 380 532

## Description

### FIELD OF THE INVENTION

The present invention relates to a plant and method for recovery and purification of used sulphur hexafluoride to a quality that enables it to be returned to service.

### BACKGROUND OF THE INVENTION

Sulphur hexafluoride (SF₆) gas is used in the electrical supply industry as an insulating gas in high-voltage equipment, for example, electrical circuit breakers and transformers. Its utility arises from several desirable properties: (i) extreme inertness (ii) almost zero polarity, (iii) almost zero electric conductivity and (iv) the ability of the molecule to reform from free radicals generated by a plasma formed in high-voltage switchgear. Deployed in the field sulphur hexafluoride tends to become contaminated with use, the major contaminants including: nitrogen, oxygen, moisture, as well as solid and gaseous by-products and mineral oils. These contaminants have a detrimental effect on the operational performance of sulphur hexafluoride, requiring replacement of the gas when contamination limits are exceeded. It is highly undesirable to release used gas to atmosphere for three main reasons: (i) clean new sulphur hexafluoride is expensive, (ii) sulphur hexafluoride is a greenhouse gas of great potency, (iii) the break-down products formed in service can be extremely toxic. Consequently, it is advantageous to recover used sulphur hexafluoride so that it can be purified and used again.

Published PCT patent application document WO 2005/119149 A1, by the present applicant, describes a system and method for recovery of sulphur hexafluoride using a two-stage process where contaminated sulphur hexafluoride is first cryogenically pumped into a first extraction vessel where the contaminated gas is initially chilled to cryogenic temperatures into a solid such that noncondensed gases including N₂ and O₂ can be purged from the first extraction vessel. The temperature within the first extraction vessel is then raised to the dew point temperature of sulphur hexafluoride while a second extraction vessel is connected to the first extraction vessel, the temperature within the second extraction vessel being lowered to cryogenic temperatures. As a result, condensed or frozen contaminants remain in the first extraction vessel while the purified sulphur hexafluoride, at the required dew point, is cryogenically pumped into the second extraction vessel. The operation of this prior art system requires ongoing manual operation for each of the process steps. Furthermore, the supervision of an operator is required to help to ensure that the required quality of recovered sulphur hexafluoride can be achieved.

The above discussion of background art is included to explain the context of the present invention. It is not to be taken as an admission that the material referred to is part of the common general knowledge in this field of technology.

The prior art process has several disadvantages: (i) it is wasteful of liquid nitrogen because of the low efficiency of heat transfer in the chilling step of both vessels, (ii) there is no heat recovery in the process meaning that additional heat to melt solid SF₆ is required, and (iii) operators are exposed to dangerous conditions created by the ultra-low temperature of liquid nitrogen, the presence of asphyxiating gaseous nitrogen and the risk of mechanical injury due to the manual manipulation of heavy cylinders.

US 4,274,851 discloses a recovery of SF₆ using cryogenic pumping. JP 2002 090061 discloses an apparatus for refining SF₆ gas by using a fractionator 5 for liquefying SF₆ and a cold trap for solidifying the SF₆.

It is an object of the present invention to provide an improved system and method for recovering a reusable grade of sulphur hexafluoride from a potentially contaminated source of sulphur hexafluoride. Within this context, it would be desirable to provide a system and method that provides improved quality control and product quality, and which can be adapted for automatic operation for at least a substantial part of the process cycle to both reduce labour requirements and improve safety of the process.

### SUMMARY OF THE INVENTION

According to a first aspect of the present invention, there is provided a plant for recovering a reusable grade of sulphur hexafluoride from a contaminated fluid which includes sulphur hexafluoride, the system including: (i) a clean-up stage arranged for receiving a stream of the contaminated fluid in liquid or vapour phase, the clean-up stage including at least one or more of a scrubber or a filter stage through which the contaminated fluid is passed for removing selected solid and liquid contaminants from the fluid and yielding a stream of partially cleaned-up fluid; (ii) a separation stage including a vessel arranged for the partially cleaned-up fluid and a chilling device associated with the separation vessel, the separation stage arranged for chilling the partially cleaned-up fluid and solidifying the sulphur hexafluoride within the separation vessel while maintaining nitrogen and other non-condensable contaminant gases in a gaseous state in the separation vessel; (iii) a venting arrangement for venting the contaminant gases from the separation vessel; (iv) a collection stage having a collection vessel arranged for receiving thawed sulphur hexafluoride from the separation vessel; and (v) a sulphur hexafluoride vapour generation stage associated with the separation and collection stages, operable for vaporising liquid sulphur hexafluoride contained within the collection vessel and transferring it into the separation vessel to promote and/or cause melting of the solidified sulphur hexafluoride which can then flow into and be collected within the collection vessel.

The contaminated fluid, which includes sulphur hexafluoride, is typically a gas sourced from high voltage and medium voltage equipment, but is presented as a saturated liquid in a pressure vessel (tanks or cylinders, for example). The major contaminants that need to be removed typically include nitrogen (N₂) and oxygen (O₂) gas, moisture, solid and gaseous by-products of electric arcing, and mineral oil. Accordingly, the plant will advantageously include a suitable transport vessel coupling system, for example an auto seal quick disconnect valve system, for allowing the connection of one or more transport vessels to the initial stage of the plant.

The contaminated fluid may initially be delivered in liquid phase from the transport vessel to the clean-up stage. The flow of the liquid phase may be driven by a differential pressure between the transport storage vessel and the separation vessel as a result of the vapour pressure of the compressed gas retained within the storage vessel in a vapour phase. A first heat exchanger acting as a chiller may advantageously be provided in the plant downstream the transport vessel coupling system but before the clean-up stage to chill the liquid phase slightly below its saturation temperature. This helps avoid potential flashing due to any pressure reduction that may take place during transport of a liquefied gas between vessels. Once the liquid phase is exhausted from the storage vessel, the remaining vapour phase of the contaminated fluid within the storage vessel may then be transferred to the separation vessel. The flow of the vapour phase will progressively decrease as the pressures in the storage and separator vessels equalise.

The clean-up stage will include at least an acid scrubber for the removal of acidic contaminant fluids from the incoming contaminated SF₆ fluid, to minimise corrosive effects of the fluid on plant equipment downstream the delivery point. However, advantageously additional filters and scrubber units will also be present in the initial clean-up stage, which serve to remove other solid and fluid contaminants typically present in contaminated SF₆ electric switch gear fluids: a solids filter, a molecular sieve dryer, an activated carbon filter and a micron filter. These devices (units) may be located in a series arrangement between the storage vessel and the separator vessel and serve, respectively, to neutralise and to absorb acid gases, to remove solids, water and mineral oil (preferably in compliance with EC60376). On the other hand, the last mentioned group of units can be located elsewhere in the plant, preferably in-line between the separation and collection vessels of the separation and collection stages.

The chilling device (or assembly) of the separation stage will preferably include at least one heat exchanger through which may be passed a refrigerant. The heat exchanger will advantageously comprise a tubular heat exchanger (as opposed to a plate heat exchanger), and as may suit circumstances, a tube heat exchanger types (with or without fins), and will advantageously be located within the separation vessel (eg tank structure) so that sulphur hexafluoride-containing fluid can be directly solidified onto the heat exchanger exterior surfaces within the separation tank. It is preferred to use liquid nitrogen (LN₂) as the refrigerant, but other refrigerants that achieve similar performance can be used as circumstances dictate.

The heat exchanger(s) of the separator (ie separation stage) and the initial heat exchanger may be located on a common refrigerant supply path, so that LN₂ may be circulated through both heat exchangers before being vented as gaseous nitrogen (GN2) to atmosphere (or otherwise recovered).

The venting arrangement will typically be provided at the separation vessel and may include an exhaust valve for allowing the contaminant gases to bleed out of the separator vessel due to the pressure within the separator vessel until the pressure within the vessel is equal to atmospheric pressure. Advantageously, a vacuum pump may form part of the venting stage to extract any further contaminant gases from the separator vessel. The atmospheric venting process is enabled only when the internal temperature of the separator vessel is controlled such that the residual vapour pressure of SF₆ within the separator vessel is kept at an advantageously low level. The venting arrangement will advantageously include a molecular sieve to prevent unintentional release into the atmosphere of any residual gaseous sulphur hexafluoride that may be present or form in the separator vessel.

Advantageously, an optional gas collection tank may be connected to the vent assembly together with a dedicated molecular sieve with by-pass, whereby contaminant gases that may be reusable can be separated and collected from the uncondensed, vented gases, eg carbon tetrafluoride (CF₄) that may be present when processing of mixed SF₆ and CF₄ contaminated gas mixtures which are used in switch gear and transformer equipment exposed to very low ambient temperatures (e.g. -50°C).

As described above, the plant according to the first aspect of the present invention includes as a characterising feature a sulphur hexafluoride vapour generation stage associated with the separation and collection stages, operable for vaporising liquid sulphur hexafluoride contained in the collection vessel. This vapour generation may be effected outside the collection vessel but is preferably carried out within the collection vessel, using a heater advantageously located also within the vessel. Suitable fluid flow control devices comprising a valve assembly will be present between the vessels in the separation and collection stages for allowing the transfer of relatively warm sulphur hexafluoride in gaseous or vapour state from the collection vessel to the separation vessel. The sensible and latent heat transferred from the warm sulphur hexafluoride gas causes efficient melting of the sulphur hexafluoride that has previously solidified on the heat transfer surfaces of the heat exchanger(s) within the collection vessel. A heater (or other heat exchanger device) may, however, be provided within the separator vessel and/or collection vessel to initiate or assist in the melting of the solidified sulphur hexafluoride.

In a preferred form, the collection vessel is located such that liquid (purified) sulphur hexafluoride can flow by gravity from the separation tank into the collection vessel. However, appropriate pumps may assist this fluid transfer. Equally, suitable discharge armatures, which may include a liquid pump, are provided at the collection vessel (tank) for filling the purified sulphur hexafluoride into final destination gas cylinders, for reuse, as would be known to the skilled addressee.

Once the purified sulphur hexafluoride is fully melted and transferred to the collection tank, the separator and collection vessels may be isolated from each other, and the plant may then process a new charge of contaminated SF₆ fluid.

In a modified form of the plant according to the first aspect of the invention, the sulphur hexafluoride vapour generation stage will be a sulphur hexafluoride thawing stage associated only with the separation stage and comprise use of the heat exchanger which is used for solidifying the SF₆ within the separation vessel. Once the solidification process has been finalised, the collection vessel is isolated from its supply line and the supply of LN₂ to the heat exchanger is switched off and instead a different heat exchange fluid is caused to flow through the heat exchanger at a temperature well above the thawing point of SF₆. To avoid potential damage to the heat exchanger as consequence of extreme temperature gradients across the heat exchanger tube walls, the thawing fluid will preferably be selected to be in liquid state and be used at a temperature below 0 degrees Celsius; the skilled person will be cognisant of suitable heat exchange fluids.

In yet a further modification, and in order to speed up the entire thawing process, a combination of both sulphur hexafluoride thawing stage and sulphur hexafluoride vapour generation stage according to the first aspect of the invention, may be present in the plant.

According to another aspect of the present invention, there is provided a method for recovering a re-useable grade of sulphur hexafluoride from a contaminated, preferably compressed and/or liquefied gas source which includes sulphur hexafluoride, said method including the steps of: evacuating a stream of contaminated sulphur hexafluoride in a liquid and/or vapour phase from a transport or storage vessel into a separation vessel (eg tank) via an intermediary and clean-up stage which includes at least one or more of a scrubber stage and filter stage in which solid and liquid contaminants are removed from said stream thereby yielding a partially cleaned sulphur hexafluoride source stream; directly solidifying the sulphur hexafluoride contained in the stream obtained from said clean-up stage within the separation vessel, preferably onto a large surface area tube heat exchanger arranged within the separation vessel; venting and preferably evacuating uncondensed contaminant gases originally contained in the stream obtained from said clean-up stage, from the separation vessel; melting the solidified sulphur hexafluoride within the separator vessel and transferring the resulting fluid sulphur hexafluoride to a collection vessel for subsequent reuse; characterised in that the process utilises gaseous or vapour phase sulphur hexafluoride obtained from the collection vessel and re-introduces it into the separation vessel for effecting heat transfer from it to the solidified sulphur hexafluoride to effect or assist in said melting. Preferably, a valve assembly is provided between the collection and separator vessels, which is controlled to allow warm, substantially uncontaminated and previously cleaned sulphur hexafluoride gas to be transferred from the collection vessel to the separator vessel to melt the solidified sulphur hexafluoride, and to allow the melted sulphur hexafluoride to be transferred to the collection vessel in liquid or gas phase.

Use of the preferred tube (or finned tube) heat exchanger within the separation vessel to effect solidification of the SF₆ will create a large surface, small thickness 'blanket' of SF₆ crystals clinging onto the heat transfer surfaces of the heat exchanger. This in turn enables more rapid thawing of the frozen SF₆ and thus a shorter thawing (liquefaction) cycle to recover re-use grade SF₆.

The system (ie plant) and method according to the present invention facilitates automatic operation for the majority of the process cycle thereby minimising the need for constant supervision by an operator and improving productivity while also helping to ensure that a high quality of purification of the sulphur hexafluoride can be achieved.

Other embodiments that may be preferred as circumstances dictate, include an alternative flow path from the one described above. In one such alternative embodiment, as already hinted to above, the clean-up stage (i) is largely removed from the front end of the process and placed at the rear end after the separation stage. An acid scrubber is however preferably retained as the sole filter that the contaminated SF₆ fluid passes through prior to being delivered into the separation vessel. In this way, SF₆ gas that is purified of acids but not purified of other contaminants is frozen in the separation stage (ii) together with other condensable contaminants. Thus, the partially purified, liquefied fluid present in the separation vessel will not only contain SF₆ but other impurities, largely water and mineral oil. These impurities can then be removed by passing the partially purified liquid fluid drawn from the collection vessel preferably prior to delivery into the collection vessel, via a set of filter scrubbers previously described as forming part of the formerly at the front clean-up of the process, or thereafter as the liquid is filled into individual transport cylinders. It is possible using this alternative flow path to circulate the contents of the storage vessel continually as needs dictate, in order to purify the entire contents of the storage vessel.

It will be convenient to further describe the invention and preferential features thereof with respect to the accompanying drawing which illustrates a preferred embodiment of a plant according to a preferred embodiment of the present invention. Other embodiments are also possible, and consequently, the particularity of the accompanying drawing is not to be understood as superseding the generality of the preceding description of the invention.

### BRIEF DESCRIPTION OF THE DRAWING

Figure 1 is a schematic plan view of a plant (or system) for recovering a reusable grade of sulphur hexafluoride from a contaminated sulphur hexafluoride gas source according to the present invention; and
Figure 2 shows the plant of fig. 1 identifying sub-plants in which discrete parts of the overall recovery process are carried out.

### DESCRIPTION OF THE PREFERRED EMBODIMENT

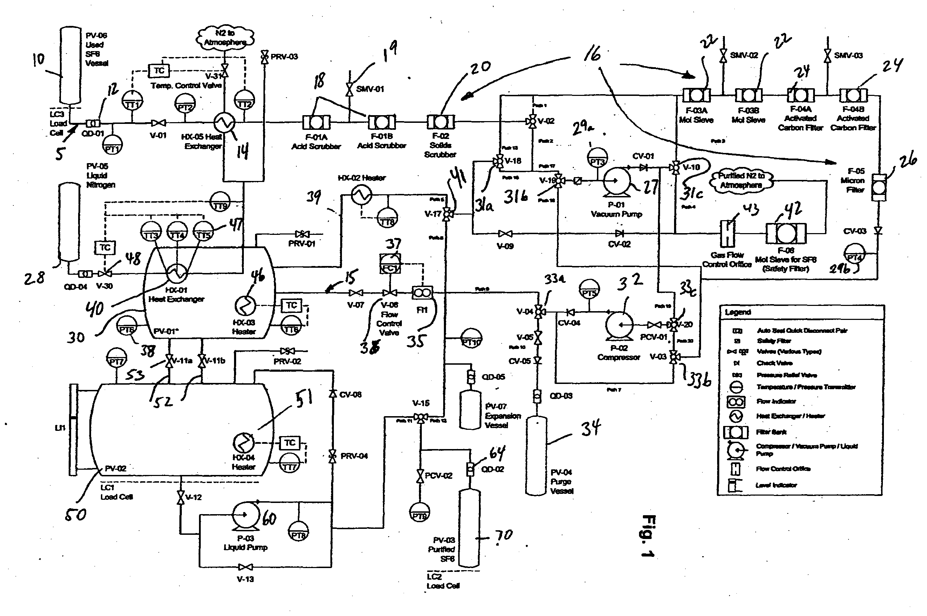

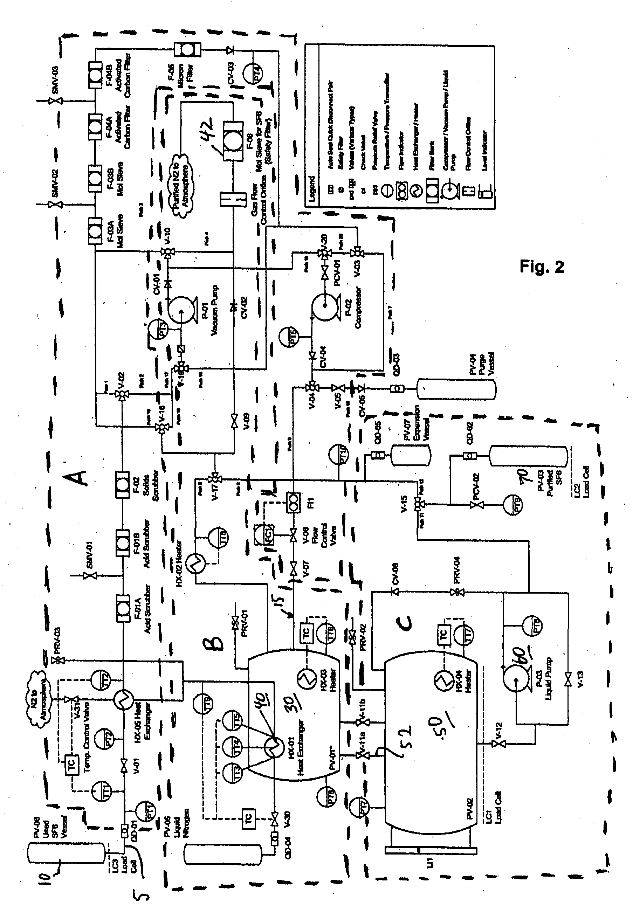

A plant for recovering a reusable grade of sulphur hexafluoride (SF₆) from a contaminated sulphur hexafluoride gas source according to the present invention, as illustrated in fig. 1, can be divided into three stages or partial plants in which discrete steps or processing sequences in the overall recovery process are carried out: Cleanup; Separation; and Storage and/or Re-use Filling. These partial plants are identified in fig. 2 at A, B and C, respectively.

Having reference to fig. 2, in the cleanup stage (or plant) A, acid solid/gaseous by-products, oil and moisture are removed from a stream of contaminated SF₆. The contaminated SF₆ is delivered to the plant (A+B+C) in liquid phase via supply line 5 from storage cylinders 10 or other vessels typically used in the transport / storage of gaseous / liquid working fluids. Stage A and the process carried out there are explained in more detail below. The partially 'cleaned' feed 15 obtained at the end of processing in plant stage A is then passed to the separation stage B.

In the separation stage (or plant) B, the partially cleaned feed 15 which contains SF₆ and contaminant gases, is initially subjected to a heat transfer process for directly solidifying SF₆ onto a finned tube heat exchanger 40 within a separation vessel (or tank) 30. Once it is determined that all the SF₆ has been frozen out of the gaseous phase, and residual SF₆ vapour pressure is sufficiently low, the non-condensable contaminant gases (mostly N₂ with some O₂ possible as well) contained in the feed from plant A, are vented to atmosphere through a final polishing/safety filter. The (frozen) SF₆ remaining in separation vessel 30 is then subjected to a further heat transfer process in order to 'melt' the frozen SF₆ into a liquid phase in which it is then transferred via lines 52 into a storage vessel 50 in plant C, as explained in detail below.

In the storage / filling plant C, the purified fluid SF₆ is stored in a suitably sized pressure storage vessel (or tank) 50 and a liquid pump 60 is used to fill individual transport cylinders 70 for re-use of SF₆ in areas of typical application (eg switchgear).

One advantageous (although not strictly essential) aspect of the overall plant arrangement is the relative positioning of separation vessel 30 and storage vessel 50 in that energy savings can be achieved by providing for gravity feed of liquid SF₆ into the storage vessel. Relevantly in the context of the invention, plants B and C are arranged and devised such that high pressure SF₆ vapour obtained from storage vessel 50 of plant C, whose temperature is well above that of the frozen SF₆ present in the separation vessel 30 in plant B, is circulated into the separation vessel 30 where the sensible and latent heat transferred from the high-pressure vapour assists in causing rapid melting of the solid SF₆ and thus reduces the overall energy required by the plant in the recovery process.

The operation and various features of the plant and method according to the present invention will be described in more detail with reference to fig. 1.

Contaminated or "used" SF₆ (denoted uSF₆) is assumed to contain N₂/O₂ / moisture / solid & gaseous by-products and mineral oil as its major contaminants. The uSF₆ is sourced from high voltage & medium voltage equipment and presents as a liquefied gas in transport cylinders 10. Typically used cylinders are dimensioned and pressurised to contain 40kg of SF₆.

The storage / transport cylinders 10 can be connected to an "Auto Seal Quick Disconnect" valve system 12 at the entry side of plant A. The cylinder support cradle, which includes the valve system 12, is devised such that the cylinders 10 are received in an 'inverted' state, ie with their outlet valve below the cylinder. This measure ensures that the initial flow of SF₆ from cylinder 10 will be in the liquid phase aided by gravity (assuming a full cylinder 10). The liquid level will run down during extraction of SF₆ leaving an increasing vapour phase in the cylinder. Liquid uSF₆ is chilled slightly below its saturation temperature when entering plant A by a heat exchanger 14, to avoid potential flashing due to pressure reduction along the transport path and subsequent processing.

The chilled liquid uSF₆ then passes through a clean-up arrangement 16, comprising different units customised for the removal of different types of contaminants typically present in uSF₆, prior to reaching a separation vessel 30 in separation plant B. The chilled liquid uSF₆ first enters a pair of acid scrubbers 18 (for example these could be activated alumina, soda lime or molecular sieve 13X), then a solids scrubber 20. These filters can be in any order. Filter content (media) is selected to specifically target trace compounds present in the SF₆ gas that need to be removed to achieve desired quality of gas. Filtering is achieved using both mechanical and chemical methods.

After emerging from the scrubbers 18, 20, the partially cleaned liquid passes through a pair of molecular sieve dryers 22, then through two activated carbon filters 24, and finally a micron filter 26. These units (filters and scrubbers) neutralise acid gases first, then remove solids and water as well as mineral oil to the desired limit, which will at least be compliant for with Standard IEC60376. The use of filter pairs with intermediate sampling between the filter pairs (eg as indicated at 19 between scrubber pair 18) allows heuristics to be constructed to predict filter life.

These filter and scrubber units 18, 20, 22, 24 and 26 are constructed in a manner such that they can be disconnected from the system without loss of SF₆ for correct disposal and maintenance. Equally, the transport path will be devised to maintain the uSF₆ in liquid phase for as long as possible as this helps to reduce transport and storage plant volumes, including the liquid transfer lines. Furthermore, the filter volumes can be reduced because the residence time in the filters is significantly reduced from the case of operation in the vapour phase.

Initially, the combined vapour pressures of the uSF₆ and nitrogen and any other non-condensable contaminant gases present within the storage cylinder 10 drives the flow of liquid through plant A via the scrubbers and filters into plant B without mechanical assistance. To this end, separation vessel 30 of plant B is held at a pressure level to provide adequate and sufficient differential pressure between storage cylinder 10 and vessel 30. To achieve the latter, vapour pressure within separator vessel 30 is maintained at a low value by passing liquid nitrogen through a heat exchanger 40, which will be described in more detail below, as it performs an additional function, located inside separator vessel 30.

The liquid nitrogen is sourced from a supply cylinder 28, which also supplies heat exchanger 14. The liquid nitrogen initially passes through heat exchanger 40 within separator vessel 30 before passing onto heat exchanger 14 as cold, gaseous nitrogen thereby chilling the uSF₆, and is finally vented into the atmosphere. The use of liquid nitrogen as a refrigerant eliminates the need for a refrigeration unit.

Once liquid uSF₆ has been extracted from cylinder 10, the remaining uSF₆ in a gaseous state will flow into the system without mechanical assistance and will be 'pumped' as it is recondensed via cryogenic means into separator vessel 30. Finally the flow of gas will slow as the pressures in cylinder 10 and separator vessel 30 equalise. However, so as to ensure that essentially all the uSF₆ is recovered from cylinder 10, a vacuum pump 27, suitably positioned and valved in line between coupling 12 and separator vessel 30, is used to reduce the pressure in cylinder 10 below the specified limit (typically 1 mbar). The additional uSF₆ exhausted via vacuum pump 27 is directed into separator vessel 30. For safe operation of the vacuum pump 27, the maximum inlet and outlet pressures should remain within set absolute pressure values these conditions need to be monitored, and appropriate pressure transducers 29a and 29b are provided in relevant flow lines. Unless these conditions are met, the vacuum pump 27 is isolated from the process stream by valves 31a, 31b, 31c. A compressor 32 is employed to compress gases (especially nitrogen when all SF₆ has been frozen out, see below) to the separator vessel 30 or to a purge vessel 34 when purging (evacuating) the plant of SF₆. Vacuum pump 27 and compressor 32 should be operated at the same time, thereby ensuring that the outlet pressure of vacuum pump 27 will remain within its limits. Before shutting off vacuum pump 27 and/or compressor 32, the relevant flow control and shut-off valves typically present in the lines connecting to and from pumps, compressors and vessels within a fluid transport and/or processing plant, eg valves 33a, 33b and 33c at compressor 32.

The flow of liquid SF₆ through plant A and B is controlled as follows: the partially cleaned SF₆ emerging from the in-line scrubbers and filters 18, 20, 22, 24 and 26 of clean-up plant A pass through flow control valve 36 to separator vessel 30. Flow rate is controlled by a process control loop preferably from a signal sent by flow meter 35 or by the use of load cells under the feed (uSF6) cylinder 10 to a flow controller 37 with the final control element being the flow control valve 36. Flow control is necessary to ensure that the residence time of uSF₆ on each of the absorbent filters and scrubbers 18 to 26 is kept to specification.

As the SF₆ and non-condensable gases, mostly nitrogen, flow into separation vessel 30, they are chilled there using the liquid nitrogen (LN₂) operated heat exchanger 40 located within vessel 30, to a temperature sufficiently low enough to minimise residual SF₆ vapour pressure. The SF₆ accumulates as solid crystals by a process of frosting on the heat exchanger 40, which can either be a plain or finned tube heat exchanger, eg a coiled tube heat exchanger. Once the entire fluid (liquid and gas) contents of storage cylinder 10 have been pumped into separator vessel 30, the latter is isolated from plant A.

The process of SF₆-frosting is monitored by measuring the pressure in the separator vessel 30, eg using appropriate pressure transducers 38. The SF₆ has completely frosted out when the vapour pressure in separation vessel 30 plateaus to a constant value. Nitrogen and any other non-condensable substances are still present in separation vessel 30, but as a gas (given their dew and condensation temperatures are below the internal temperature maintained during venting of non-condensable contaminant gasses).

The use of a tube heat exchanger (such as heat exchanger 40) for effecting deposition freezing of SF₆ onto and thawing off from the outer surfaces of such heat exchanger has many advantages. Firstly, there is an increased deposition area for the frozen sulphur hexafluoride. Use of a tube heat exchanger as compared to a plate heat exchanger minimises the occurrence of blockages of the heat exchanger. The heat exchanger also ensures an increased exposed surface of frozen SF₆ assuming a similar overall volume of SF₆ to be condensed into solid phase. Furthermore, it also provides for more efficient thawing due to the relatively unimpeded access of vapour to the frozen surface of the SF₆, as well as relatively unimpeded draining of the thawed SF₆. Further, when compared with the Applicant's earlier International Publication No. WO 2005/119149, where the SF₆ is frozen within a gas cylinder, more rapid thawing can be achieved. Another advantage is the more compact the heat exchanger the higher the amount of SF₆ that can be frozen per unit volume of the vessel which results in a faster chill down step which results in an overall quicker process.

Once all the SF₆ has frozen onto the heat exchanger 40, the nitrogen and other non-condensable gases present in vessel 30 are vented to atmosphere via line 39. This is achieved by opening an exhaust valve 41 downstream of separator vessel 30 (but could be elsewhere) and allowing the gases to flow under their own pressure. Flow will cease when the pressure inside separator vessel 30 is equal to atmospheric pressure. Vacuum pump 27 is used to evacuate the remaining gas from separator vessel 30 down to a final specified pressure (which is the vapour pressure of SF₆ at the desired operating temperature). To ensure that no SF₆ is unintentionally released to atmosphere, the gases being vented are passed through a molecular sieve 42 located downstream of a gas flow control device (orifice) 43 as a final polishing step.

Once the gases are vented, separation vessel 30 is isolated from atmosphere to commence the purified SF₆ recovery process, by melting the solid (frozen) SF₆.

In accordance with the invention, an important feature is that melting of solid SF₆ is accomplished by supplying 'warm' SF₆ vapour into separation vessel 30 from a collection vessel 50 of the storage and filling plant C.

The sensible and latent heat transferred from the high-pressure vapour causes melting of the SF₆ ice. This helps to provide improved energy efficiency within the system. Notwithstanding this, the thawing process can be further assisted as required by using an electric heater 46 located within separation vessel 30. The heat (from the supplied vaporous SF₆ and heater 46) will cause cycles of vapour and condensation to occur within vessel 30 with good heat transfer characteristics so that the melting of the SF₆ ice occurs quickly. The separation vessel 30 is advantageously located physically above the collection vessel 50, thereby promoting a gravitational flow of liquid SF₆ from separation vessel 30 into collection vessel 50, and obviating a separate pump. It will be further noted that a heater 51 is also advantageously located in the collection vessel 50 where it can heat liquid phase SF₆ which is then circulated into separation vessel 30 via valved lines 52 to assist in the thawing of solid SF₆ in the separation vessel 30. This heater has more efficient heat transfer due to being bathed in SF₆ of the collection vessel 50 so can be sized larger delivering more heat. The heater 51 will also advantageously be used to maintain the temperature within collection vessel 50 a certain value above melting point of SF₆ This ensures economical and environmentally sound operation of the plant.

Once all the SF₆ is thawed and accumulated in the collection vessel 50, the separation and collection vessels 30, 50 are isolated from each other by closing valves 53 located in the two fluid lines 52 running between vessels 30 and 50. At this stage, Plants A and B are ready to process a new batch of contaminated / used SF₆ by connecting a new cylinder 10 to coupling point 12 and recommencing the flow of LN₂ to heat exchanger 40 within vessel 30.

Clean-grade SF₆ stored in vessel 50 can then be used to fill empty gas cylinders 70 to specification with purified SF₆ from the collection vessel 50, using liquid pump 60 which is appropriately valved in a supply line circuit to an "Auto Seal Quick Disconnect" valve system 64 at the exit side of plant C. It is preferable that such a pump have no seal through which SF₆ could leak. The optional use of a manifold enables the filling of multiple cylinders and the simultaneous taking of a sample for certification of quality.

Furthermore, the heater 51 in the collection vessel 50 can be used to heat vessel 50 during the cylinder filling stage by raising the temperature within tank 50 to increase vapour pressure of SF₆ to assist flow of SF₆ into the cylinders.

The goal of the design of the overall plant and sub-plants A, B and C, and the purification method according to the present invention is that it will operate automatically for the majority of the cycle thus freeing up the need for constant supervision by an operator and improving productivity while the required quality of the resulting purified SF₆ is achieved.

The entire plant uses automatic operated valves and control valves for controlling liquid flow and SF₆ flow within the plant. A control system is then used to operate all the sequences, such as the clean-up stage, the chilling stage, the separation stage and the cylinder filling stage. Thus the majority of the process is automatic with the only manual interaction being the connecting of cylinders to the plant. Automation of these processes ensures both repeatability and reliability of quality of the produced gas. This is a significant improvement over the manual system described in WO 2005/119149 A1.

Modifications and variations to the described plant layout are within the ambit of the skilled person. So, for example, the scrubber and filter stage (units 18 to 26) can be subdivided such as to keep acid and solids scrubbers 18 and 20 in the location shown in the layout of figure 1 and 2, whereas the filter units 22 to 26 may be repositioned elsewhere in the plant, eg between separation and collection vessels 30 and 40.

## Claims

1. A plant for recovering a reusable grade of sulphur hexafluoride from a contaminated gas source including sulphur hexafluoride, the plant including:
a clean-up stage for receiving a stream of the contaminated gas source in a liquid or vapour phase, the clean-up stage including at least one or more of a scrubber and filter stage or unit through which the contaminated gas stream is passed for removing specific contaminants from the stream and obtain a partially cleaned-up fluid stream containing sulphur hexafluoride;
a separation stage having a separation vessel for receiving the partially cleaned-up fluid stream and a chilling assembly for chilling the fluid stream and solidifying the sulphur hexafluoride within the separation vessel while maintaining nitrogen and other non-condensable contaminant gases in a gaseous state;
a venting arrangement for venting the contaminant gases from the separation vessel;
a collection stage having a collection vessel for receiving sulphur hexafluoride in liquid and gaseous phase from the separation vessel;
a valve assembly located between the separator and collection vessels for controlling fluid flow communication between the vessels; and
a sulphur hexafluoride vapour generation stage associated with the separation and collection stages, operable for vaporising liquid sulphur hexafluoride contained within the collection vessel and transferring warm sulphur hexafluoride vapour into the separation vessel to promote and/or cause melting of the solidified sulphur hexafluoride which can then flow into and be collected within the collection vessel.

2. The plant according to claim 1, further including a tank docking armature for connecting a transport storage vessel containing the contaminated gas to the clean-up stage and arranged for delivering the contaminated gas stream by a differential pressure between the transport storage vessel and the separation vessel.

3. The plant according to claim 2, further including a vacuum pump for extracting remaining contaminated gas when in the vapour phase from the transport storage vessel to the separation vessel; and a compressor for compressing the remaining contaminated gas when in the vapour phase for delivery to the separation vessel or a purge vessel.

4. The plant according to any one of the preceding claims, wherein the clean-up stage includes one or more of an acid scrubber, a solids filter, a molecular sieve dryer, an activated carbon filter and/or a micron filter.

5. The plant according to any one of the preceding claims, wherein the chilling assembly includes a first heat exchanger through which a refrigerant can be passed, optionally a tubular heat exchanger, and optionally a finned tube heat exchanger.

6. The plant according to claim 5, further including a second heat exchanger located between the tank docking armature and the clean-up stage for chilling the contaminated gas stream below a saturation temperature thereof.

7. The plant according to claim 6, wherein the first and second heat exchangers are arranged in-line such that refrigerant passing through the first heat exchanger located within the separator vessel also passes through the second heat exchanger.

8. The plant according to any one of claims 5 to 7, wherein the refrigerant is liquid nitrogen.

9. The plant according to any one of the preceding claims, wherein the sulphur hexafluoride vapour generation stage comprises a heater, preferably arranged within the collection vessel.

10. The plant according to any one of the preceding claims, further including a gas collection vessel disposed for collecting selected gases vented from the separation vessel.

11. The plant according to claim 10, further including a molecular sieve disposed between the gas collection vessel and the separation vessel and arranged for selective filtering of gases to be delivered into the gas collection vessel.

12. The plant according to any one of the preceding claims, wherein the separation vessel is located above the collection vessel so that sulphur hexafluoride can be received in the collection vessel from the separation vessel by gravity feed.

13. The plant according to any one of the preceding claims, further including a heater located within the separation vessel.

14. A method for recovering a re-useable grade of sulphur hexafluoride from a contaminated gas source including sulphur hexafluoride, said method including the steps of:
removing selected solid and/or liquid contaminants from a stream of contaminated sulphur hexafluoride fluid by passing said fluid stream in a liquid and/or vapour phase through a clean-up stage thereby to obtain a partially cleaned-up fluid;
solidifying the sulphur hexafluoride contained within the partially cleaned-up fluid within a separation vessel located downstream from the cleanup stage whilst maintaining nitrogen and other contaminant gases in gaseous stage;
venting the contaminant gases from the separator vessel;
melting the solidified sulphur hexafluoride and transferring the melted sulphur hexafluoride through a valve assembly to a collection vessel for subsequent reuse;
wherein melting of the solidified sulphur hexafluoride is effected or assisted by introducing warm sulphur hexafluoride vapour obtained from the collection vessel into the separator and thawed, fluid melted sulphur hexafluoride is transferred to the collection vessel.

15. The method according to claim 14, wherein the contaminated gas source including sulphur hexafluoride is delivered to the clean-up stage from a transport storage vessel by using a differential pressure between the transport storage vessel and the separation vessel.

16. The method according to claim 15, further including the steps of extracting remaining contaminated gas in the transport storage vessel when in the vapour phase with a vacuum pump, and compressing the contaminated gas when in the vapour phase with a compressor for delivery from the clean-up stage to the separation vessel or a purge vessel.

17. The method according to any one of the claims 14 to 16, wherein the clean-up stage includes passing the stream of contaminated sulphur hexafluoride fluid through one or more of an acid scrubber, a solids filter, a molecular sieve dryer, an activated carbon filter and/or a micron filter.

18. The method according to any one of the claims 14 to 17, wherein the step of solidifying the sulphur hexafluoride contained within the partially cleaned-up fluid within a separation vessel comprises chilling the fluid and causing it to deposit onto exterior surfaces of a heat exchanger, preferably a tube heat exchanger through which a refrigerant can be circulated or passed.

19. The method according to any one of claims 14 to 18, wherein stream of contaminated sulphur hexafluoride fluid is chilled below a saturation temperature of the sulphur hexafluoride prior to or during passing through the clean-up stage.

20. The method of claim 19, wherein chilling of the stream of contaminated sulphur hexafluoride fluid and the partially cleaned-up fluid is effected using the same refrigerant, preferably liquid nitrogen.

21. The method according to any one of claims 14 to 20, wherein melting of solidified sulphur hexafluoride in the separation vessel is aided by a heater located within the vessel.

22. The method according to any one of claims 14 to 21, wherein transferring the melted sulphur hexafluoride through a valve assembly to a collection vessel is achieved by gravity feeding.

23. The method according to any one of claims 14 to 22, wherein generating of the warm sulphur hexafluoride vapour for effecting or aiding in the melting of solid sulphur hexafluoride includes heating liquid sulphur hexafluoride within the collection vessel.

24. The method according to any one of claims 14 to 23, further including the step of selectively collecting contaminant gases vented from the separation vessel, in particular separating and collecting re-usable gases.

## Patentansprüche

1. Eine Anlage zur Rückgewinnung einer wiederverwendbaren Qualität von Schwefelhexafluorid aus einer kontaminierten Gasquelle, die Schwefelhexafluorid einschließt, wobei die Anlage einschließt:
eine Reinigungsstufe zum Aufnehmen eines Stroms der kontaminierten Gasquelle in einer flüssigen oder Dampfphase, wobei die Reinigungsstufe mindestens eine oder mehrere von einer Wäscher- und Filterstufe oder -einheit einschließt, durch die der kontaminierte Gasstrom geleitet wird, um spezifische Kontaminationsstoffe aus dem Strom zu entfernen und einen teilgereinigten Fluidstrom zu erhalten, der Schwefelhexafluorid enthält;
eine Trennstufe mit einem Trenngefäß zum Aufnehmen des teilgereinigten Fluidstroms und einer Kühlanordnung zum Kühlen des Fluidstroms und Verfestigen des Schwefelhexafluorids innerhalb des Trenngefäßes, während Stickstoff und andere nicht-kondensierbare Kontaminationsgase in einem gasförmigen Zustand verbleiben;
eine Entlüftungsanordnung zum Entlüften der Kontaminationsgase aus dem Trenngefäß;
eine Sammelstufe mit einem Sammelgefäß zum Aufnehmen von Schwefelhexafluorid in flüssiger und gasförmiger Phase aus dem Trenngefäß;
eine Ventilanordnung, die sich zwischen den Trenn- und Sammelgefäßen befindet, um die Fluidflusskommunikation zwischen den Gefäßen zu steuern; und
eine Schwefelhexafluoriddampfgenerierungsstufe, die mit den Trenn- und Sammelstufen zusammenhängt, die zum Verdampfen von flüssigem Schwefelhexafluorid funktional sind, welches in dem Sammelgefäß enthalten ist, und zum Überführen von warmem Schwefelhexafluoriddampf in das Trenngefäß, um Schmelzen des verfestigten Schwefelhexafluorids zu fördern und/oder herbeizuführen, welches dann in das Sammelgefäß fließen und in diesem gesammelt werden kann.

2. Die Anlage nach Anspruch 1, die ferner eine Tankankopplungsarmatur zum Anschließen eines Transportlagerungsgefäßes, welches das kontaminierte Gas enthält, an die Reinigungsstufe einschließt, und angeordnet ist, um den kontaminierten Gasstrom durch einen Differentialdruck zwischen dem Transportlagerungsgefäß und dem Trenngefäß abzugeben.

3. Die Anlage nach Anspruch 2, ferner einschließend eine Vakuumpumpe zum Extrahieren von verbleibendem kontaminiertem Gas, wenn es sich in der Dampfphase befindet, aus dem Transportlagerungsgefäß in das Trenngefäß; und einen Kompressor zum Komprimieren des verbleibenden kontaminierten Gases, wenn es sich in der Dampfphase befindet, zur Abgabe an das Trenngefäß oder ein Spülgefäß.

4. Die Anlage nach einem der vorhergehenden Ansprüche, wobei die Reinigungsstufe einen oder mehrere von einem Säurewäscher, einem Feststofffilter, einem Molekularsiebtrockner, einem Aktivkohlefilter und/oder einem Mikrometerfilter einschließt.

5. Die Anlage nach einem der vorhergehenden Ansprüche, wobei die Kühlanordnung einen ersten Wärmetauscher, durch den ein Kühlmittel geleitet werden kann, gegebenenfalls einen Rohrwärmetauscher und gegebenenfalls einen Rippenrohrwärmetauscher einschließt.

6. Die Anlage nach Anspruch 5, die ferner einen zweiten Wärmetauscher einschließt, der sich zwischen der Tankankopplungsarmatur und der Reinigungsstufe befindet, um den kontaminierten Gasstrom unter seine Sättigungstemperatur zu kühlen.

7. Die Anlage nach Anspruch 6, wobei der erste und zweite Wärmetauscher in Reihe angeordnet sind, so dass Kühlmittel, das durch den ersten Wärmetauscher geleitet wird, der sich innerhalb des Trenngefäßes befindet, auch durch den zweiten Wärmetauscher geleitet wird.

8. Die Anlage nach einem der Ansprüche 5 bis 7, wobei das Kühlmittel flüssiger Stickstoff ist.

9. Die Anlage nach einem der vorhergehenden Ansprüche, wobei die Schwefelhexafluoriddampfgenerierungsstufe einen Heizer umfasst, der vorzugsweise innerhalb des Sammelgefäßes angeordnet ist.

10. Die Anlage nach einem der vorhergehenden Ansprüche, ferner einschließend ein Gassammelgefäß, das zum Sammeln von ausgewählten Gasen bereit steht, die aus dem Trenngefäß entlüftet werden.

11. Die Anlage nach Anspruch 10, ferner einschließend ein Molekularsieb, das zwischen dem Gassammelgefäß und dem Trenngefäß bereit steht und zum selektiven Filtern von Gasen angeordnet ist, die in das Gassammelgefäß abgegeben werden sollen.

12. Die Anlage nach einem der vorhergehenden Ansprüche, wobei sich das Trenngefäß oberhalb des Sammelgefäßes befindet, so dass Schwefelhexafluorid durch Schwerkraftzuführung aus dem Trenngefäß in dem Sammelgefäß aufgenommen werden kann.

13. Die Anlage nach einem der vorhergehenden Ansprüche, ferner einschließend einen Heizer, der sich innerhalb des Trenngefäßes befindet.

14. Ein Verfahren zur Rückgewinnung einer wiederverwendbaren Qualität von Schwefelhexafluorid aus einer kontaminierten Gasquelle, die Schwefelhexafluorid einschließt, wobei das Verfahren die folgenden Schritte einschließt:
Entfernen ausgewählter fester und/oder flüssiger Kontaminationsstoffe aus einem Strom von kontaminiertem Schwefelhexafluoridfluid durch Leiten des Fluidstroms in einer flüssigen und/oder Dampfphase durch eine Reinigungsstufe, um dadurch ein teilgereinigtes Fluid zu erhalten;
Verfestigen des in dem teilgereinigten Fluid enthaltenen Schwefelhexafluorids innerhalb eines Trenngefäßes, das sich stromabwärts der Reinigungsstufe befindet, während Stickstoff und andere Kontaminationsgase in der gasförmigen Stufe gehalten werden;
Entlüften der Kontaminationsgase aus dem Trenngefäß;
Schmelzen des verfestigten Schwefelhexafluorids und Überführen des geschmolzenen Schwefelhexafluorids durch die Ventilanordnung zu einem Sammelgefäß zur nachfolgenden Wiederverwendung;
wobei das Schmelzen des verfestigten Schwefelhexafluorids bewirkt oder unterstützt wird, indem warmer Schwefelhexafluoriddampf, der aus dem Sammelgefäß erhalten wurde, in die Trennvorrichtung eingebracht wird, und getautes fließfähiges Schwefelhexafluorid in das Sammelgefäß überführt wird.

15. Das Verfahren nach Anspruch 14, wobei die kontaminierte Gasquelle, die Schwefelhexafluorid einschließt, aus einem Transportlagerungsgefäß unter Verwendung von Differentialdruck zwischen dem Transportlagerungsgefäß und dem Trenngefäß an die Reinigungsstufe abgegeben wird.

16. Das Verfahren nach Anspruch 15, ferner einschließend die Schritte des Extrahierens von verbleibendem kontaminiertem Gas, wenn es in der Dampfphase ist, in das Transportlagerungsgefäß mittels einer Vakuumpumpe, und Komprimieren des kontaminierten Gases, wenn es in der Dampfphase ist, mit einem Kompressor zur Abgabe aus der Reinigungsstufe in das Trenngefäß oder ein Spülgefäß.

17. Das Verfahren nach einem der Ansprüche 14 bis 16, wobei die Reinigungsstufe Leiten des Stroms aus kontaminiertem Schwefelhexafluoridfluid durch einen oder mehrere von einem Säurewäscher, einem Feststofffilter, einem Molekularsiebtrockner, einem Aktivkohlefilter und/oder einem Mikrometerfilter einschließt.

18. Das Verfahren nach einem der Ansprüche 14 bis 17, wobei der Schritt des Verfestigens des Schwefelhexafluorids, das in dem teilgereinigten Fluid enthalten ist, innerhalb eines Trenngefäßes Kühlen des Fluids und Bewirken von dessen Abscheidung auf Außenflächen eines Wärmetauschers, vorzugsweise eines Rohrwärmetauschers, umfasst, durch den ein Kühlmittel zirkuliert oder geleitet werden kann.

19. Das Verfahren nach einem der Ansprüche 14 bis 18, wobei der Strom des kontaminierten Schwefelhexafluoridfluids vor oder während des Leitens durch die Reinigungsstufe unter eine Sättigungstemperatur des Schwefelhexafluorids gekühlt wird.

20. Das Verfahren nach Anspruch 19, wobei das Kühlen des Stroms des kontaminierten Schwefelhexafluoridfluids und des teilgereinigten Fluids unter Verwendung desselben Kühlmittels bewirkt wird, vorzugsweise flüssigem Stickstoff.

21. Das Verfahren nach einem der Ansprüche 14 bis 20, wobei Schmelzen von verfestigtem Schwefelhexafluorid in dem Trenngefäß durch einen Heizer unterstützt wird, der sich innerhalb des Gefäßes befindet.

22. Das Verfahren nach einem der Ansprüche 14 bis 21, wobei das Überführen des geschmolzenen Schwefelhexafluorids durch eine Ventilanordnung zu einem Sammelgefäß durch Schwerkraftzuführung erreicht wird.

23. Das Verfahren nach einem der Ansprüche 14 bis 22, wobei das Generieren von warmem Schwefelhexafluoriddampf zum Bewirken oder Unterstützen des Schmelzens von festem Schwefelhexafluorid das Erwärmen von flüssigem Schwefelhexafluorid innerhalb des Sammelgefäßes einschließt.

24. Das Verfahren nach einem der Ansprüche 14 bis 23, ferner einschließend den Schritt des selektiven Sammelns von Kontaminationsgasen, die aus dem Trenngefäß entlüftet werden, insbesondere Trennen und Sammeln von wiederverwendbaren Gasen.

## Revendications

1. Une installation pour la récupération d'hexafluorure de soufre réutilisable à partir d'une source gazeuse contaminée comprenant de l'hexafluorure de soufre, l'installation comprenant :
une étape de purification destinée à recevoir un courant de la source gazeuse contaminée dans une phase liquide ou vapeur, l'étape de purification comprenant au moins une ou plusieurs étapes ou unités d'épuration et de filtration que le courant gazeux contaminé traverse pour éliminer des contaminants spécifiques du courant et obtenir un courant fluide partiellement purifié contenant de l'hexafluorure de soufre ;
une étape de séparation comprenant une cuve de séparation destinée à recevoir le courant fluide partiellement purifié et un ensemble réfrigérant pour refroidir le courant fluide et solidifier l'hexafluorure de soufre dans la cuve de séparation tout en maintenant l'azote et les autres contaminants gazeux non condensables à un état gazeux ;
un agencement de ventilation destiné à ventiler les contaminants gazeux hors de la cuve de séparation ;
une étape de collecte comprenant une cuve de collecte destinée à recevoir de l'hexafluorure de soufre dans une phase liquide et gazeuse à partir de la cuve de séparation ;
un ensemble de valve situé entre les cuves de séparation et de collecte, destiné à contrôler la communication du courant fluide entre les cuves ; et
une étape de génération de vapeur d'hexafluorure de soufre associée avec les étapes de séparation et de collecte, pouvant être utilisée pour vaporiser l'hexafluorure de soufre liquide contenu dans la cuve de collecte et transférer la vapeur d'hexafluorure de soufre chaude dans la cuve de séparation afin de favoriser et/ou provoquer la fusion de l'hexafluorure de soufre solidifié qui peut alors s'écouler dans et être collecté dans la cuve de collecte.

2. L'installation selon la revendication 1, comprenant en outre une armature de fixation de cuve destinée à connecter une cuve de stockage de transport contenant le gaz contaminé à l'étape de purification et conçue pour distribuer le courant gazeux contaminé par une pression différentielle entre la cuve de stockage de transport et la cuve de séparation.

3. L'installation selon la revendication 2, comprenant en outre une pompe à vide destinée à extraire le gaz contaminé restant lorsqu'il se trouve dans la phase vapeur depuis la cuve de stockage de transport vers la cuve de séparation ; et un compresseur destiné à compresser le gaz contaminé restant lorsqu'il se trouve dans la phase vapeur pour l'introduire dans la cuve de séparation ou une cuve de purge.

4. L'installation selon l'une quelconque des revendications précédentes, dans laquelle l'étape de purification comprend un ou plusieurs éléments parmi un épurateur acide, un filtre à solides, un séchoir à tamis moléculaires, un filtre à charbon actif et/ou un filtre micronique.

5. L'installation selon l'une quelconque des revendications précédentes, dans laquelle l'ensemble réfrigérant comprend un premier échangeur de chaleur qui peut être traversé par un réfrigérant, éventuellement un échangeur de chaleur tubulaire et éventuellement un échangeur de chaleur tubulaire à ailettes.

6. L'installation selon la revendication 5, comprenant en outre un deuxième échangeur de chaleur situé entre l'armature de fixation de cuve et l'étape de purification, destiné à refroidir le courant gazeux contaminé en dessous d'une température de saturation de celui-ci.

7. L'installation selon la revendication 6, dans laquelle le premier et le deuxième échangeur de chaleur sont agencés en ligne de sorte que le réfrigérant traversant le premier échangeur de chaleur situé dans la cuve de séparation traverse également le deuxième échangeur de chaleur.

8. L'installation selon l'une quelconque des revendications 5 à 7, dans laquelle le réfrigérant est de l'azote liquide.

9. L'installation selon l'une quelconque des revendications précédentes, dans laquelle l'étape de génération de vapeur d'hexafluorure de soufre comprend un dispositif de chauffage, de préférence agencé dans la cuve de collecte.

10. L'installation selon l'une quelconque des revendications précédentes, comprenant en outre une cuve de collecte de gaz disposée pour collecter des gaz sélectionnés ventilés depuis la cuve de séparation.

11. L'installation selon la revendication 10, comprenant en outre un tamis moléculaire disposé entre la cuve de collecte de gaz et la cuve de séparation, et conçu pour la filtration sélective des gaz à introduire dans la cuve de collecte de gaz.

12. L'installation selon l'une quelconque des revendications précédentes, dans laquelle la cuve de séparation est située au-dessus de la cuve de collecte, de sorte que l'hexafluorure de soufre puisse être reçu dans la cuve de collecte depuis la cuve de séparation par alimentation par pesanteur.

13. L'installation selon l'une quelconque des revendications précédentes, comprenant en outre un dispositif de chauffage disposé dans la cuve de séparation.

14. Un procédé de récupération d'hexafluorure de soufre réutilisable à partir d'une source gazeuse contaminée comprenant de l'hexafluorure de soufre, ledit procédé comprenant les étapes suivantes :
l'élimination de contaminant solides et/ou liquides sélectionnés d'un courant d'hexafluorure de soufre contaminé fluide par passage dudit courant fluide dans une phase liquide et/ou vapeur dans une étape de purification afin d'obtenir un fluide partiellement purifié ;
la solidification de l'hexafluorure de soufre contenu dans le fluide partiellement purifié dans une cuve de séparation située en aval de l'étape de purification tout en maintenant l'azote et les autres contaminants gazeux à l'état gazeux ;
la ventilation des contaminants gazeux hors de la cuve de séparation ;
la fusion de l'hexafluorure de soufre solidifié et le transfert de l'hexafluorure de soufre fondu par le biais d'un ensemble de valve dans une cuve de collecte pour une réutilisation ultérieure ;
la fusion de l'hexafluorure de soufre solidifié étant effectuée ou favorisée par introduction d'une vapeur d'hexafluorure de soufre chaude obtenue à partir de la cuve de collecte dans le séparateur, et l'hexafluorure de soufre fondu fluide décongelé étant transféré dans la cuve de collecte.

15. Le procédé selon la revendication 14, dans lequel la source gazeuse contaminée comprenant de l'hexafluorure de soufre est introduite dans l'étape de purification depuis une cuve de stockage de transport en utilisant une pression différentielle entre la cuve de stockage de transport et la cuve de séparation.

16. Le procédé selon la revendication 15, comprenant en outre les étapes d'extraction du gaz contaminé restant dans la cuve de stockage de transport lorsqu'il se trouve dans la phase vapeur avec une pompe à vide, et la compression du gaz contaminé lorsqu'il se trouve dans la phase vapeur avec un compresseur pour l'introduction depuis l'étape de purification dans la cuve de séparation ou une cuve de purge.

17. Le procédé selon l'une quelconque des revendications 14 à 16, dans lequel l'étape de purification comprend le passage du courant d'hexafluorure de soufre contaminé fluide au travers d'un ou de plusieurs éléments parmi un épurateur acide, un filtre à solides, un séchoir à tamis moléculaires, un filtre à charbon actif et/ou un filtre micronique.

18. Le procédé selon l'une quelconque des revendications 14 à 17, dans lequel l'étape de solidification de l'hexafluorure de soufre contenu dans le fluide partiellement purifié dans une cuve de séparation comprend le refroidissement du fluide et la provocation de son dépôt sur des surfaces extérieures d'un échangeur de chaleur, de préférence d'un échangeur de chaleur tubulaire dans lequel un réfrigérant peut être mis en circulation ou passé.

19. Le procédé selon l'une quelconque des revendications 14 à 18, dans lequel un courant d'hexafluorure de soufre contaminé fluide est refroidi en dessous d'une température de saturation de l'hexafluorure de soufre avant ou pendant son passage dans l'étape de purification.

20. Le procédé selon la revendication 19, dans lequel le refroidissement du courant d'hexafluorure de soufre contaminé fluide et du fluide partiellement purifié est effectué en utilisant le même réfrigérant, de préférence de l'azote liquide.

21. Le procédé selon l'une quelconque des revendications 14 à 20, dans lequel la fusion de l'hexafluorure de soufre solidifié dans la cuve de séparation est favorisée par un dispositif de chauffage situé dans la cuve.

22. Le procédé selon l'une quelconque des revendications 14 à 21, dans lequel le transfert de l'hexafluorure de soufre fondu par le biais d'un ensemble de valve dans une cuve de collecte est réalisé par alimentation par pesanteur.

23. Le procédé selon l'une quelconque des revendications 14 à 22, dans lequel la génération de la vapeur d'hexafluorure de soufre chaude pour effectuer ou favoriser la fusion de l'hexafluorure de soufre solide comprend un chauffage de l'hexafluorure de soufre liquide dans la cuve de collecte.

24. Le procédé selon l'une quelconque des revendications 14 à 23, comprenant en outre l'étape de collecte sélective de contaminants gazeux ventilés depuis la cuve de séparation, notamment la séparation et la collecte de gaz réutilisables.
